# EUROPÄISCHE PATENTANMELDUNG

(11) **EP 1 052 152 A2**
(43) Veröffentlichungstag der Anmeldung: **15.11.2000**
(21) Anmeldenummer: 00107634.8
(22) Anmeldetag: 08.04.2000
(51) Int. Cl.: B60R 21/20

(54) **Lastkraftwagen oder Omnibus mit Airbag**

(30) Priorität: 11.05.1999 AT 84899
(71) Anmelder: STEYR NUTZFAHRZEUGE AG, A-4400 Steyr (AT)
(72) Erfinder: Hauser, Friedrich, Ing., 4400 Steyr (AT)

(57) **Zusammenfassung**

Die Erfindung betrifft einen Lastkraftwagen oder Omnibus, mit einer Windschutzscheibe (3) und einem innen über dieser angeordneten Staukasten (4) mit Räumen für die Unterbringung von beispielsweise Gepäck sowie den Einbau von Elektrogeräten, Anzeigeinstrumenten und dergleichen.

Erfindungsgemäß ist in den Staukasten (4) wenigstens ein Airbag (8) einschließlich zugehöriger Auslösevorrichtung (9) eingebaut, der im Falle seiner Aktivierung mittels der Auslösevorrichtung (9) durch eine normalerweise abgedeckte Öffnung aus dem Staukasten (4) heraus nach unten in Richtung Lenkrad (7) bzw. Armaturenbrett aufblasbar ist.

## Beschreibung

Die Erfindung betrifft einen Lastkraftwagen oder Omnibus, mit einer Windschutzscheibe und einem innen über dieser angeordneten Staukasten mit Räumen für Unterbringung von beispielsweise Gepäck sowie den Einbau von Elektrogeräten, Anzeigeinstrumenten und dergleichen.

Obschon es bisher unüblich war, wird in zunehmendem Maß auch bei Lastkraftwagen und Omnibussen der Einbau eines Fahrer- und Beifahrerairbags gefordert. Dabei bietet es sich an, für deren Unterbringung die gleichen Orte vorzusehen wie in einem Personenkraftwagen, also für den Fahrerairbag das Lenkrad und den Beifahrerairbag das Armaturenbrett. Hinsichtlich des Fahrerairbags besteht dabei aber das Problem, daß bei einem Lastkraftwagen oder Omnibus das Lenkrad anders als bei einem Pkw relativ wenig zum Fahrer hin geneigt und nahezu horizontal ausgerichtet ist. Die Folge davon ist, daß der Airbag sich aus dem Lenkrad praktisch nur nach oben entfaltet, also nicht zum Fahrer hin. Verletzungen im Bauch- oder Brustbereich des Fahrers wären damit nicht mit Sicherheit auszuschließen. Außerdem wäre bei besonders großgewachsenen Fahrern der Kopf nicht geschützt, da dieser oberhalb der Entfaltungsgrenze des Airbags läge.

Es ist daher Aufgabe der Erfindung, bei einem Lastkraftwagen oder Omnibus der gattungsgemäßen Art eine solche Unterbringung des bzw. der Airbags zu schaffen, daß dessen Funktion des Kopf- und Oberkörperschutzes einwandfrei erreicht werden kann.

Diese Aufgabe ist bei einem Lastkraftwagen oder Omnibus der gattungsgemäßen Art entsprechend dem Kennzeichen des Anspruchs 1 dadurch gelöst, daß in den Staukasten wenigstens ein Airbag einschließlich zugehöriger Auslöseeinrichtung eingebaut ist, der im Fall seiner Aktivierung mittels der Auslösevorrichtung durch eine normalerweise abgedeckte Öffnung aus dem Staukasten heraus nach unten in Richtung Lenkrad bzw. Armaturenbrett aufblasbar ist.

Vorteilhafte Ausgestaltungen und Weiterbildungen dieser Lösung sind in den Unteransprüchen angegeben.

Die erfindungsgemäße Lösung hat die Vorteile, daß der Airbag mit seiner Auslösevorrichtung problemlos im Staukasten unterbringbar ist, außerdem bei ausgelösten Airbag ein ungünstiger Winkel zwischen diesem und dem Oberkörper des Fahrers/Beifahrers vermieden und der Kopf sowie Oberkörper rechtzeitig vom Airbag abgefangen werden, das Verletzungsrisiko des Fahrers durch Anschlagen am Lenkrad minimiert ist. Die erfindungsgemäße Anordnung und Auslösung des Airbags schützt, weil dieser von oben kommt, auch besonders auf den Kopf des Fahrers/Beifahrers unabhängig von dessen Größe. Besonders günstig kann es sein, wenn dem Airbag eine zusätzliche Abstützvorrichtung zugeordnet ist, die im Fall seiner Auslösung ebenfalls aktiviert wird, ihn dann vorne quasi als Anschlag sauber abstützt und seine Verschiebung zur Windschutzscheibe hin bei Aufprall des Fahrers/Beifahrers verhindert.

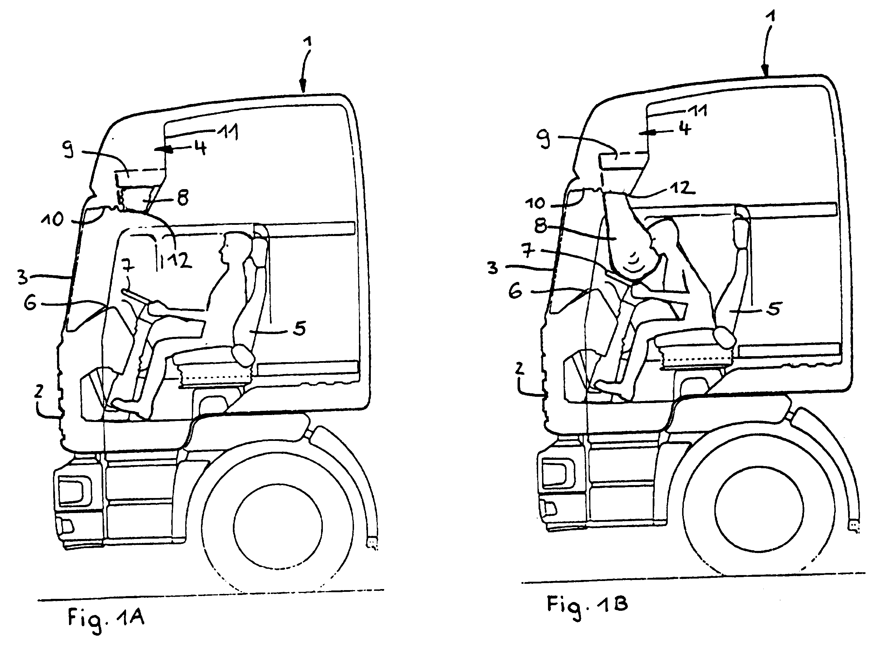

Nachfolgend ist die Erfindung anhand dreier in der Zeichnung dargestellter Ausführungsbeispiele näher erläutert. In der Zeichnung zeigen die Figuren 1A, 2A und 3A einen Lastkraftwagen schematisiert mit jeweils einer Ausführungsform der Erfindung mit unausgelöstem Airbag, die Figuren 1B, 2B und 3B dagegen zeigen das jeweilige Ausführungsbeispiel mit ausgelöstem Airbag.

In den Figuren sind des besseren Verständnisses wegen gleiche bzw. einander entsprechende Teile mit gleichen Bezugszeichen angezogen.

In den Figuren ist das Fahrerhaus 1 eines Frontlenker-Lastkraftwagen gezeigt. In dessen Frontwand 2 ist eine Windschutzscheibe 3 eingebaut. Oberhalb derselben ist ein in den Innenraum des Fahrerhauses 1 hineinragender Staukasten 4 angeordnet, der Räume für die Unterbringung von Gepäck oder anderen Utensilien sowie den Einbau von Elektrogeräten wie Radio, Uhr, Fahrtenschreiber, Anzeigegeräten bzw. -instrumenten und dergleichen aufweist. Mit 5 ist ein Sitz, hier der Fahrersitz, mit 6 das Armaturenbrett und mit 7 das Lenkrad bezeichnet.

Außerdem ist wenigstens ein Airbag 8 mit zugeordneter Auslöseeinrichtung 9 vorgesehen. Wenn nur ein Airbag 8 vorgesehen ist, handelt es sich um jenen, der den Fahrer schützen soll und in dessen Bereich wirksam wird. Vorzugsweise ist jedoch auch für jeden Beifahrer neben dem Fahrer jeweils ein Airbag 8 mit zugeordneter Auslöseeinrichtung 9 vorgesehen.

Erfindungsgemäß ist der Airbag 8 einschließlich seiner Auslöseeinrichtung 9 im Staukasten 4 untergebracht und dort in einem hierfür vorgesehenen Abschnitt bzw. Raum eingebaut. Dieser Airbag 8 ist im Fall seiner Aktivierung mittels der Auslösevorrichtung 9 durch eine normalerweise abgedeckte Öffnung aus dem Staukasten 4 heraus in Richtung Lenkrad 7 bzw. Armaturenbrett 6 nach unten aufblasbar - siehe Figuren 1B, 2B, 3B -, dies vorzugsweise derart, daß er nach voller Entfaltung oberseitig am Lenkrad 7 (Fahrer-Airbag) bzw. ober- oder innenraumseitig am Armaturenbrett 6 (Beifahrer-Airbag) zur Abstützung bringbar ist.

Die Öffnung im Staukasten 4, durch die sich der Airbag 8 entfaltet, kann an der Unterseite 10 oder der Rückseite 11 oder am eckseitigen Übergangsbereich 12 zwischen Unterseite 10 und Rückseite 11 des Staukastens 4 angeordnet und normalerweise durch eine schwenkbare Klappe oder einen eingeklipsten Deckel verschlossen sein.

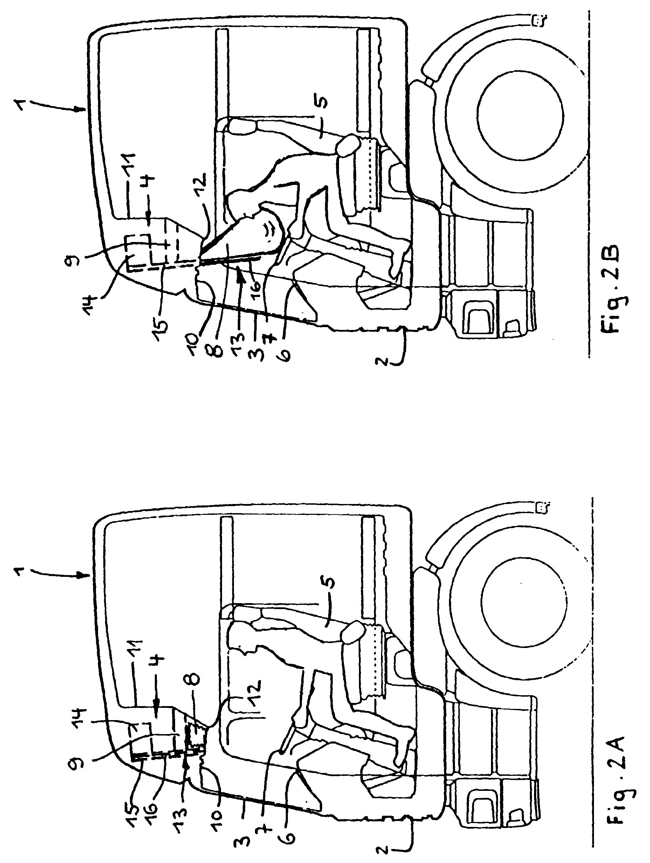

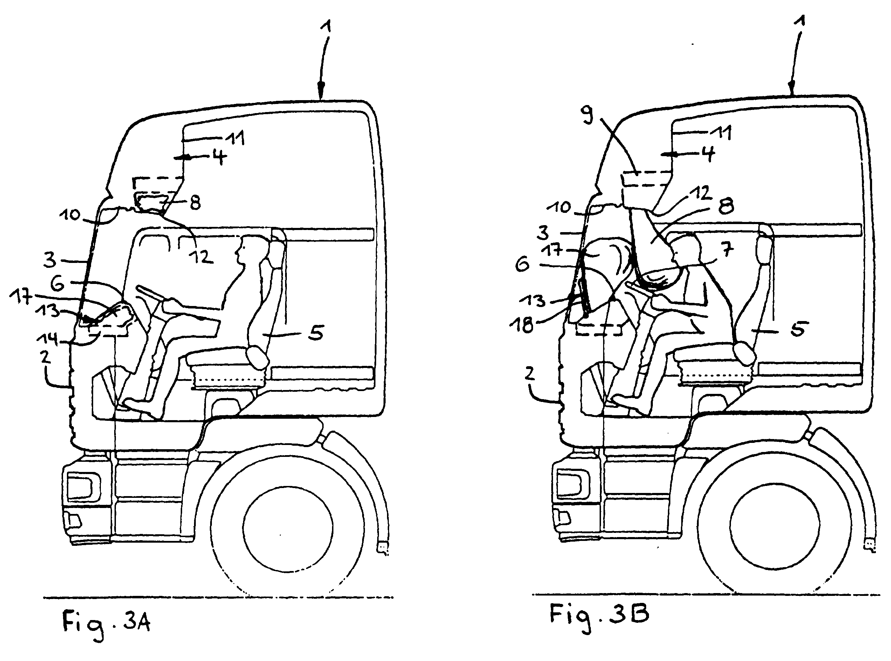

Je nach Höhe der Windschutzscheibe 3 bzw. Abstand zwischen Unterseite 10 des Staukastens 4 und Lenkrad 7 bzw. Armaturenbrett 6 kann es notwendig sein oder sich als zweckmäßig erweisen, dem jeweiligen Airbag 8 eine gleichzeitig mit diesem oder zeitlich geringfügig vereilend auslösbare Abstützeinrichtung 13 zuzuordnen. Diese mittels einer ihr zugeordneten Auslösevorrichtung 14 aktivierbare Abstützvorrichtung 13 - siehe Fig. 2A, 2B, und 3A, 3B - ist bei ihrer Aktivierung in den Raum zwischen Windschutzscheibe 3 und Fahrer bzw. Beifahrer hinein in eine den aufgeblasenen Airbag 8 vorne abstützende Wirklage - siehe Fig. 2B, 3B - bringbar.

Im Fall des Beispiels gemäß Fig. 2A, 2B ist die Abstützvorrichtung 13 durch eine mittels der Auslösevorrichtung 14 aus dem Innenraum des Staukastens 4 herausschießbare, beiderseits in schienenartigen Kulissen oder einem Schacht 15 geführte Abstützplatte 16 gebildet.

Im Fall des Beispiels gemäß Fig. 3A, 3B ist die Abstützvorrichtung 13 durch einen zusätzlichen, mittels der Auslösevorrichtung 14 aktivier- und aufblasbaren Airbag 17 gebildet. Dieser ist zusammen mit seiner Auslösevorrichtung 14 im Innenraum des Armaturenbrettes 6 untergebracht und durch eine normalerweise mittels eines Dekkels oder einer Klappe 18 abgedeckte Öffnung hindurch derart nach oben zur Entfaltung bringbar, daß er vom an der Windschutzscheibe 3 abgestützt zwischen dieser und dem aus Bereich des Staukastens 4 heraus sich entfaltenden Airbag 8 einen Anschlag oder Zwischenpuffer - siehe Fig. 3B - bildet.

## Patentansprüche

1. Lastkraftwagen oder Omnibus, mit einer Windschutzscheibe (3) und einem innen über dieser angeordneten Staukasten (4) mit Räumen für die Unterbringung von beispielsweise Gepäck sowie den Einbau von Elektrogeräten, Anzeigeinstrumenten und dergleichen, dadurch gekennzeichnet, daß in den Staukasten (4) wenigstens ein Airbag (8) einschließlich zugehöriger Auslösevorrichtung (9) eingebaut ist, der im Fall seiner Aktivierung mittels der Auslösevorrichtung (9) durch eine normalerweise abgedeckte Öffnung aus dem Staukasten (4) heraus nach unten in Richtung Lenkrad (7) bzw. Armaturenbrett (6) aufblasbar ist.

2. Lastkraftwagen oder Omnibus nach Anspruch 1, dadurch gekennzeichnet, daß der fahrerseitige Airbag (8) derart im Staukasten (4) untergebracht ist, daß er bei seiner Auslösung in Richtung Lenkrad (7) und so stark aufblasbar ist, daß er nach voller Entfaltung oberseitig am Lenkrad (7) zur Abstützung bringbar ist.

3. Lastkraftwagen oder Omnibus nach Anspruch 1, dadurch gekennzeichnet, daß der beifahrerseitige Airbag (8) derart im Staukasten (4) untergebracht ist, daß er bei seiner Auslösung in Richtung Armaturenbrett (6) hin und so stark aufblasbar ist, daß er nach seiner vollen Entfaltung am Armaturenbrett (6) zur Abstützung bringbar ist.

4. Lastkraftwagen oder Omnibus nach Anspruch 1, dadurch gekennzeichnet, daß die Öffnung, durch die der Airbag (8) entfaltbar ist, an der Unterseite (10) oder der Rückseite (11) oder am eckseitigen Übergangsbereich (12) zwischen Unterseite (10) und Rückseite (11) des Staukastens (4) angeordnet ist und diese durch eine schwenkbare Klappe oder einen eingeklipsten Deckel normalerweise abgedeckt ist.

5. Lastkraftwagen oder Omnibus nach Anspruch 1, dadurch gekennzeichnet, daß einem Airbag (8) eine gleichzeitig mit diesem oder mit geringfügigem zeitlichen Verlauf aktivierbare Abstützvorrichtung (13) zugeordnet ist, die mittels einer ihr zugeordneten Auslösevorrichtung (14) in den Raum zwischen Windschutzscheibe (3) und Fahrer bzw. Beifahrer hinein in eine den aufgeblasenen Airbag (8) vorne abstützende Wirklage bringbar ist.

6. Lastkraftwagen oder Omnibus nach Anspruch 5, dadurch gekennzeichnet, daß die Abstützvorrichtung (13) eine mittels der Auslösevorrichtung (14) aus dem Innenraum des Staukastens (4) herausschießbare, beiderseits in schienenartigen Kulissen oder einem Schacht (15) geführte Abstützplatte (16) gebildet ist.

7. Lastkraftwagen oder Omnibus nach Anspruch 5, dadurch gekennzeichnet, daß die Abstützvorrichtung (13) durch einen zusätzlichen, mittels der zugeordneten Auslösevorrichtung (14) aktivier- und aufblasbaren Airbag (17) gebildet, der im Innenraum des Armaturenbrettes (6) untergebracht und durch eine normalerweise mittels eines Deckels oder einer Klappe (18) abgedeckte Öffnung hindurch derart nach oben zur Entfaltung bringbar ist, daß er vorn an der Windschutzscheibe (3) abgestützt zwischen dieser und dem aus dem Bereich des Staukastens (4) heraus sich entfaltenden Airbag (8) für letzteren einen Anschlag oder Zwischenpuffer bildet.
